# EUROPEAN PATENT APPLICATION

(11) **EP 1 737 198 A2**
(43) Date of publication of application: **27.12.2006**
(21) Application number: 06012636.4
(22) Date of filing: 20.06.2006
(51) Int. Cl.: H04M 1/27, H04M 1/725

(54) **Method and system for providing photographed image-related information to user, and mobile terminal therefor**

(30) Priority: 20.06.2005 KR 20050053256
(71) Applicant: Samsung Electronics Co., Ltd., Suwon-si, Gyeonggi-Do (KR)
(72) Inventor: Kim, Soon-Ok, Yeongtong-gu Suwon-si Gyeonggi-do (KR); Kim, Dae- Gyu, Yeongtong-gu Suwon-si Gyeonggi-do (KR); Park, Yong-Soo, Yeongtong-gu Suwon-si Gyeonggi-do (KR); Lee, Chul-Hwan, Yeongtong-gu Suwon-si Gyeonggi-do (KR); Seo, Yoo-Duck, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a mobile terminal (MT) for acquiring information related to an image photographed through the MT's camera module. The MT captures a desired image in the photographed image, and either internally searches for information related to the captured image or transmits an information request to an information server via MT the internet or a wireless network. Upon receiving the captured image from the mobile terminal, the information server recognizes an image pattern or a character from the captured image, and searches for information related thereto. Alternatively, upon receiving an image pattern or a character, the information server searches for information related to the received image pattern or character. The information server transmits the searched information to the MT, and the MT displays the received information for the user.

## Description

The present invention relates generally to a method and system for managing image information, and in particular, to a method and system for providing image-related information to a user, and a mobile terminal therefor.

With the recent popularization of mobile terminals, users can enjoy various services, such as traffic information service for providing road condition information to a traveling user through a screen of a mobile terminal, "My Bell" service for allowing a user to register his/her own unique bell sounds, and a mobile paging service for providing text information indicating arrival of a voice message at a voice mail box to a user. Because the mobile terminals are designed to support various additional services provided by service providers, such as a voice mail box function and a special information receiving function, the mobile terminals' users are provided with various conveniences in addition to a conventional phone call function.

As various services and additional functions become commonplace, mobile communication systems provide not only voice and data services but also ISDN-class multimedia service supporting a data rate of several Mb/s. Recently, terminals suitable for the mobile communication systems have been developed. For example, a mobile terminal with a camera module having a function capable of photographing a subject and storing the photographed image has become commercially available.

Mobile terminals have become more common and include functions such as a camera function, users can conveniently take pictures anytime and anyplace using the mobile terminals. In addition, because the mobile terminals equipped with a camera can be conveniently carried by users, the users can take pictures in case of an emergency and can also take pictures anytime as desired.

Terminals with a camera module include various methods. In order to increase usefulness and efficiency of the mobile terminals having a camera module and to meet various user demands, it is necessary to apply the above-stated various services and additional functions to the mobile terminals having a camera module. For example, it is possible to implement an optical character recognition (OCR) function capable of recognizing characters such as phone numbers and data printed on a document using the camera module included in the mobile terminals.

Although the camera module included in the mobile terminals has various uses, the use of the camera module was restricted to the OCR function.

It is, therefore, the object of the present invention to provide a method and system for providing image-related information to a user, and a mobile terminal therefor.

This object is solved by the subject matter of the independent claims.

Preferred embodiments are defined in the dependent claims.

According to one aspect of the present invention, there is provided a mobile terminal for providing image-related information to a user. The mobile terminal includes a camera module for photographing an image; a database for storing an image, an image pattern or a character, and information related thereto; and a controller for recognizing an image pattern or a character from an image photographed using the camera module, searching the database for information related thereto, and providing the searched information to the user.

According to another aspect of the present invention, there is provided a method for providing image-related information to a user in a system including a mobile terminal and an information server, the method including, the mobile terminal photographing a particular image using the mobile terminal, recognizing an image pattern or a character from the photographed image, and transmitting the recognized result to the information server. The information server searching the recognized result for information related to the recognized image pattern or character, and transmitting the searched information to the mobile terminal. The mobile terminal displays the searched information provided from the information server.

The present invention will become more apparent from the following detailed description when taken in conjunction with the accompanying drawings in which:
FIG. 1 is a diagram illustrating a configuration of a system including a mobile terminal for providing image-related information according to an embodiment of the present invention;
FIG. 2 is a block diagram illustrating a structure of a mobile terminal according to an embodiment of the present invention;
FIG. 3 is a flow diagram illustrating a message flow between a mobile terminal and an information server according to an embodiment of the present invention;
FIG. 4 is a flow diagram illustrating a message flow between a mobile terminal and an information server according to another embodiment of the present invention;
FIG. 5 is a flowchart illustrating an operation of providing information related to a captured image in a mobile terminal according to an embodiment of the present invention;
FIG. 6 is a flowchart illustrating an operation of capturing one scene of a moving image and acquiring information related to the captured image in a mobile terminal according to an embodiment of the present invention; and
FIG. 7 is a flowchart illustrating an operation of acquiring information related to two or more pattern recognition targets, if any, according to an embodiment of the present invention.

Several exemplary embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for clarity and conciseness.

A mobile terminal according to the present invention operates to acquire information related to an image photographed through a camera module included therein. That is, the mobile terminal internally searches for information related to an image photographed through its camera module or transmits an information request to an information server via the Internet or a wireless network. The photographed image can include images with outlines of a building, a signboard of a shop, a number plate of a bus, etc. The mobile terminal can either directly transmit the photographed image to the information server, or can recognize image patterns or characters from the photographed image and then transmit the recognition result to the information server. The image photographed through the camera module can be partially captured by the user. That is, the mobile terminal allows the user to capture only a particular (e.g., a selected) area of the image photographed through the camera. In this case, information on only the captured area of the photographed image can be transmitted to the information server.

Upon receiving the photographed image from the mobile terminal, the information server recognizes image patterns or characters from the received photographed image and searches for information related thereto. Alternatively, upon receiving image patterns or characters from the mobile terminal, the information server searches for information related to the received image patterns or characters. If the information server transmits the searched information to the mobile terminal, the mobile terminal displays the received information for the user. Altematively, the mobile terminal recognizes image patterns or characters from the photographed image, searches its database for information related thereto, and provides the searched information to the user. Also, in this case, the image photographed through the camera can be partially captured by the user.

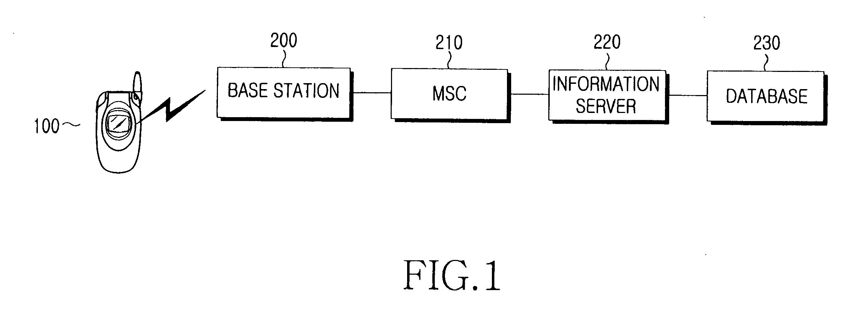

FIG 1 is a diagram illustrating a configuration of a system including a mobile terminal for providing image-related information according to the present invention.

Referring to FIG 1, a mobile terminal 100 wirelessly communicates with a base station 200. The base station 200 wirelessly connects with the mobile terminal 100 located in its cell area and provides mobile communication service to the mobile terminal 100. The base station 200 is connected to a mobile switching center (MSC) 210. The mobile switching center 210 connected to the base station 200, performs a call connection switching function for processing a call termination/origination request to the mobile terminal 100, and performs a network interworking operation with another mobile switching center. In addition, the mobile switching center 210 is connected to an information server 220 and allows the information server 220 to interwork with the mobile terminal 100.

The mobile terminal 100 may transmit an image photographed through its camera module to the information server 220 via the base station 200 and the mobile switching center 210. Altematively, the mobile terminal 100 may recognize image patterns or characters from the image photographed through its camera module and transmit the recognition result to the information server 220. Upon receiving the photographed image from the mobile terminal 100, the information server 220 recognizes image patterns or characters from the photographed image and searches for information related thereto. Alternatively, upon receiving image patterns or characters from the mobile terminal 100, the information server 220 searches for information related to the received image patterns or characters. To this end, the information server 220 includes a database 230 for storing the images, the image patterns or characters, and information related thereto, provided from the mobile terminal 100. For example, the database 230 can store an image of a particular building or signboard and global positioning system (GPS) data related to a position thereof. In addition, the database 230 can store other information such as bus numbers which can include line/time information.

In this case, if the mobile terminal 100 transmits a photographed image of a particular building(s) to the information server 220, the information server 220 can search the database 230 for the photographed image and transmit its associated stored GPS data to the mobile terminal 100. The GPS data can include a map and a route from the current place to the corresponding building/signboard. Altematively, the information server 220 can recognize image patterns or characters from the captured image and search for information related to the recognized image patterns or characters. For example, if an image of a cityscape, a bridge, and/or individual building is photographed by the mobile terminal, a database can be searched to identify the photographed cityscape, bridge or building and return information such as New York City, Brooklyn Bridge and/or Empire State Building. Additionally, other data such as the location and/or directions for the objects in photographed image can be displayed to the user.

In addition, the mobile terminal 100 can capture a number plate of a bus and then read the number plate using the OCR technology. If the mobile terminal 100 transmits the bus number to the information server 220, the information server 220 can transmit line/time information for the corresponding bus number searched from the database 230, to the mobile terminal 100. If the information server 220 transmits the searched information to the mobile terminal 100, the mobile terminal 100 displays the received information for the user.

Alternatively, without the information server, the mobile terminal 100 can recognize image patterns or characters from an image photographed using its camera module, searches its own database for information related thereto, and provide the information for the user.

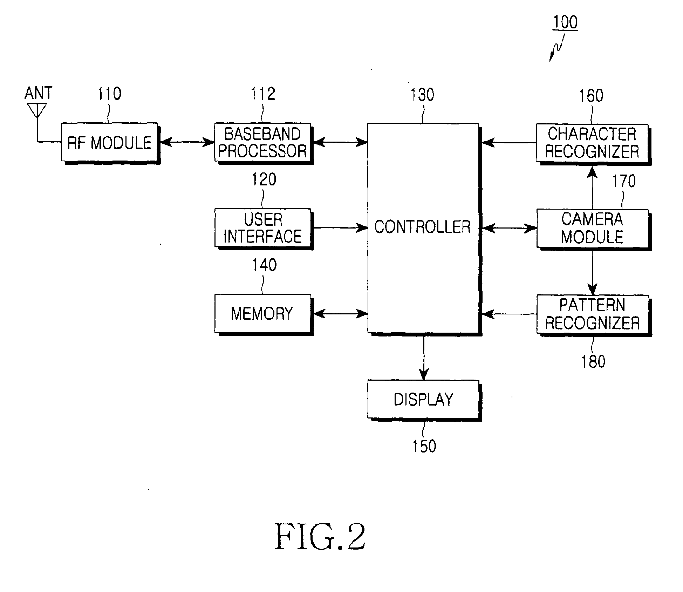

A block diagram of the mobile terminal will now be described with reference to FIG. 2 wherein the mobile terminal 100 includes a radio frequency (RF) module 110, a baseband processor 112, a user interface 120, a controller 130, a memory 140, a display 150, a character recognizer 160, a camera module 170, and a pattern recognizer 180.

The controller 130 controls the overall operation of the mobile terminal, and controls each part of the mobile terminal to photograph a particular image and provide its associated information according to an embodiment of the present invention.

An operation of the controller 130 will now be described in more detail. According to an embodiment, the controller 130 can transmit the image photographed through the camera module 170 to the information server 220.

According to another embodiment, the controller 130 may recognize image patterns or characters from the image photographed through the camera module 170 and transmit the recognition result to the information server 220. In this case, the controller 130 recognizes the image patterns from the photographed image using the pattern recognizer 180. In addition, the controller 130 recognizes the characters from the photographed image using the character recognizer 160. The controller 130 transmits the recognized image patterns or characters to the information server 220 via the RF module 110. When the controller 130 cannot recognize image patterns or characters acquired from the photographed image, it can transmit the photographed image to the information server 220.

According to further another embodiment, without the information server, the controller 130 can recognize image patterns or characters from the image photographed using the camera module 170, search its memory 140 for information related thereto, and provide the information to the user.

Optionally, the controller 130 can capture only a predetermined part of the image photographed through the camera module 170, for the user. To this end, when several pattern recognition targets were photographed, for example, when there are three number plates of buses, the controller 130 provides information to the user so that the user can select a desired target. If the user selects a particular area of the photographed image depending on the provided information, the controller 130 captures the selected particular area and transmits only the capture area of the full image to the information server 220. In addition, when the user desires to acquire information related to a scene of a moving image being displayed, the controller 130 allows the user to acquire an image of the desired scene by pressing a capture key. To this end, the controller 130 determines whether the capture key is input while a moving image is being displayed, and if the capture key is pressed, the controller 130 captures an image at that moment. Thereafter, the controller 130 recognizes image patterns or characters from the captured image.

The controller 130 may either search a database realized in, for example, the memory 140, for information related to the recognized image patterns or characters, or transmit an information request to the information server 220 to acquire the corresponding information.

The RF module 110 exchanges RF signals with a base station via an antenna ANT. The RF module 110 converts a received RF signal into an intermediate frequency (IF) signal and outputs the IF signal to the baseband processor 112. Further, the RF module 110 converts an IF signal received from the baseband processor 112 into an RF signal before transmission. The baseband processor 112 (e.g., a baseband analog ASIC (BAA) for providing an interface between the controller 130 and the RF module 110) converts a baseband digital signal provided from the controller 130 into an IF signal and outputs the IF signal to the RF module 110, and converts an analog IF signal provided from the RF module 110 into a baseband digital signal and outputs the baseband digital signal to the controller 130.

The user interface 120 includes a plurality of numerical keys and function keys, and outputs key input data corresponding to a key pressed by the user to the controller 130. The memory 140 includes a Read Only Memory (ROM) for storing a plurality of application programs, and a Random Access Memory (RAM) for storing information necessary for controlling an operation of the mobile terminal 100, and a voice memory for storing voice information. In addition, the memory 140 can include a database (not shown) for storing images, image patterns or characters, and information related thereto. Further, the memory 140 can store data for image pattern recognition or character recognition. Commonly, the display 150 includes a liquid crystal display (LCD), and displays moving images as well as various messages and icons under the control of the controller 130.

A description will now be made of a message flow between a mobile terminal and an information server.

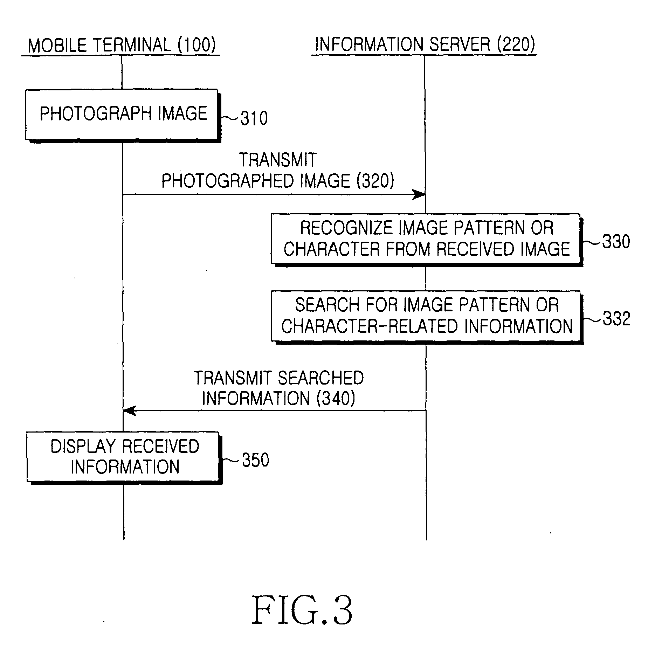

FIG. 3 is a diagram illustrating a message flow between a mobile terminal and an information server according to the present invention. A mobile terminal 100 photographs a particular image in step 310, and transmits the photographed image to an information server 220 in step 320. The information server 220 recognizes image patterns or characters from the received image in step 330, and searches for information related to the image patterns or characters in step 332. As described above, the information server 220 includes a database 230 for storing the images, the image patterns or characters, and information related thereto, provided from the mobile terminal 100, and searches the database 230 for image-related information. The information server 220 transmits the searched information to the mobile terminal 100 in step 340. The mobile terminal 100 displays the received information for the user in step 350.

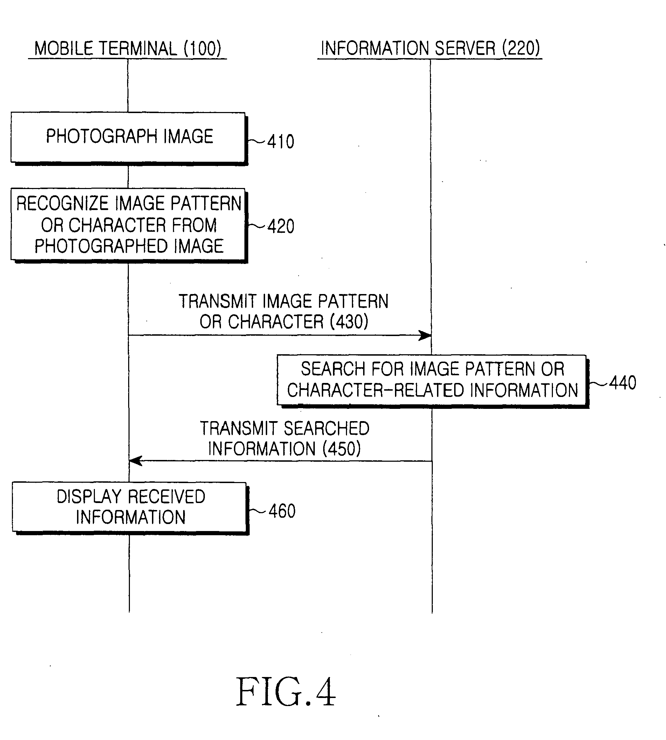

FIG. 4 is a diagram illustrating a message flow between a mobile terminal and an information server according to the present invention. A mobile terminal 100 photographs a particular image in step 410, and recognizes image patterns or characters from the photographed image in step 420. The mobile terminal 100 transmits the image patterns or characters to the information server 200 in step 430. For example, after photographing a number plate of a particular bus, the mobile terminal 100 can read a bus number from the number plate using optical character recognition (OCR) technology. In this case, the mobile terminal 100 transmits the bus number to the information server 220. If a controller 130 cannot recognize image patterns or characters acquired from the photographed image, the controller 130 can transmit the photographed image in its entirety to the information server 220.

In step 440, the information server 220 searches a database 230 for information related to the transmitted image patterns or characters. In step 450, the information server 220 transmits the searched information to the mobile terminal 100. As described above, if the mobile terminal 100 transmits the bus number to the information server 220, the information server 220 can search the database 230 for line/time information for the corresponding bus number and transmit the line/time information to the mobile terminal 100 in step 450. In step 460, the mobile terminal 100 displays the information transmitted from the information server 220 on a display 150.

In the foregoing embodiments, the mobile terminal 100 accesses the information server 220 to acquire information related to the photographed image. However, without the information server 220, the mobile terminal 100 can search its own database for information related to an image photographed using its camera module 170, and provide the searched information to the user.

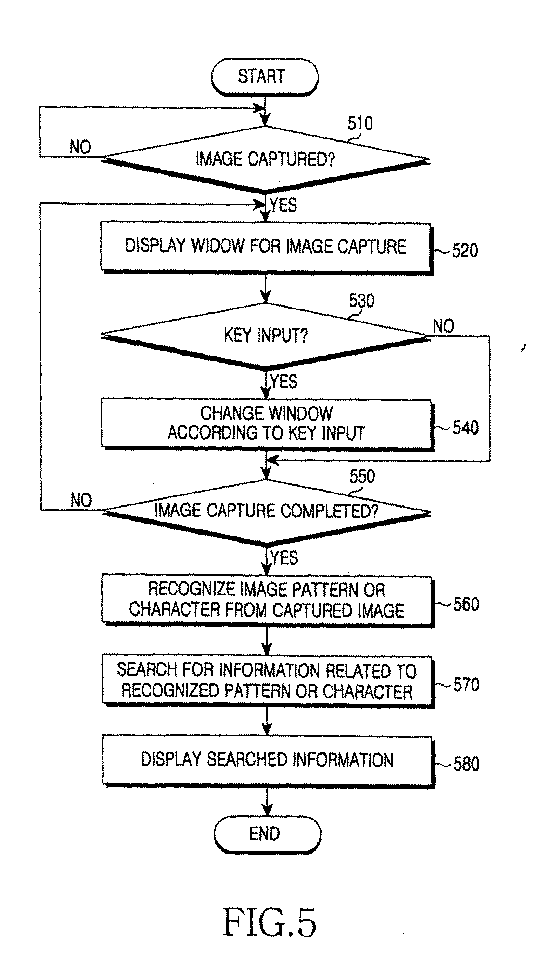

FIG. 5 is a flowchart illustrating an operation of providing information related to a photographed image in a mobile terminal according to the present invention. A controller 130 of the mobile terminal 100 determines in step 510 whether an image capture function is selected by a user. According to this embodiment, the user can capture a desired part of a photographed image. If the image capture function is selected by the user, the controller 130 proceeds to step 520 where it displays a window for image capture on a display 150. The capture window is provided for capturing only a part of the full image photographed through a camera module 170. For example, the controller 130 can display a predetermined rectangular window on the full image photographed through the camera module 170. A size and/or position of the capture window can be changed by the user. The controller 130 determines in step 530 whether there is any key input for changing a size and/or position of the capture window. If there is a key input for changing a size and/or position of the capture window, the controller 130 proceeds to step 540 where it changes the capture window according to the corresponding key input. Thereafter, the controller 130 determines in step 550 whether the image capture has been completed. If the user inputs an image capture complete key or the capture window is not changed for a predetermined time, the controller 130 can detect completion of the image capture. If the image capture is completed, the controller 130 proceeds to step 560 where it recognizes an image pattern or a character from the captured image. Thereafter, in step 570, the controller 130 searches, for example, a database realized in a memory 140 for information related to the recognized image pattern or character. As described above, according to this embodiment, the mobile terminal 100 can include a database for storing images, image patterns or characters, and information related thereto. In step 580, the controller 130 displays the searched information on the display 150.

Although this embodiment captures a part of the photographed image, another embodiment may select a pattern recognition target in a displayed image being photographed. It will be understood by those skilled in the art that the latter embodiment can be simply implemented through a slight modification of the former embodiment. In this case, the full photographed image is stored in the mobile terminal and only the pattern recognition target area is transmitted to a file transfer server. Altematively, the mobile terminal can search for related information by pertorming pattern recognition only on the pattern recognition target area.

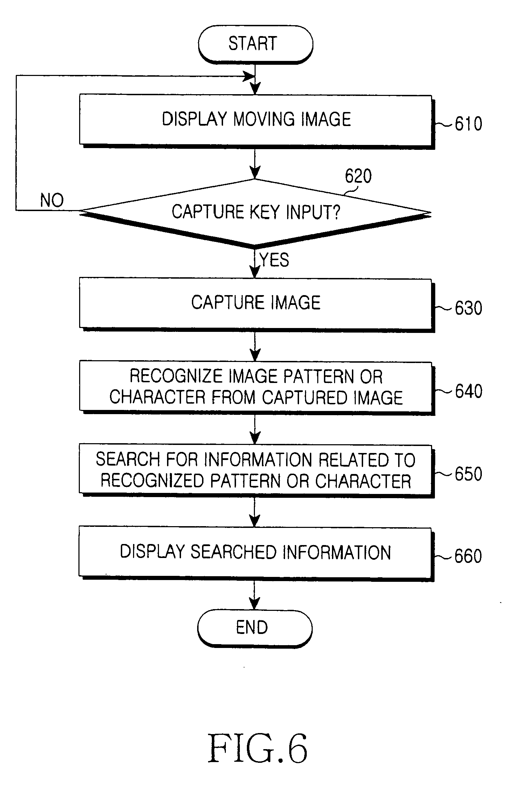

According to another embodiment of the present invention, the mobile terminal can capture one scene of a displayed moving image. An operation of capturing one scene of a moving image and acquiring information related to the captured image will now be described with reference to FIG. 6.

Referring to FIG. 6, the controller 130 displays a moving image in step 610. In this case, the controller 130 may display either a moving image received in real time or a stored moving image being reproduced. While displaying the moving image, the controller 130 determines in step 620 whether a capture key is input. If the user desires to acquire information related to a corresponding scene of the moving image being displayed, the user can acquire the desired scene by pressing the capture key. If the user presses the capture key, the controller 130 proceeds to step 630 where the controller 130 captures an image displayed at the time when the capture key is pressed. Thereafter, in step 640, the controller 130 recognizes an image pattern or a character from the captured image.

In step 650, the controller 130 searches, for example, the database realized in the memory 140 for information related to the recognized image pattern or character. Alternatively, the controller 130 may acquire the information related to the image pattern or character recognized in step 640 by transmitting an information request to an information server 220. In step 660, the controller 130 displays the information related to the acquired image pattern or character.

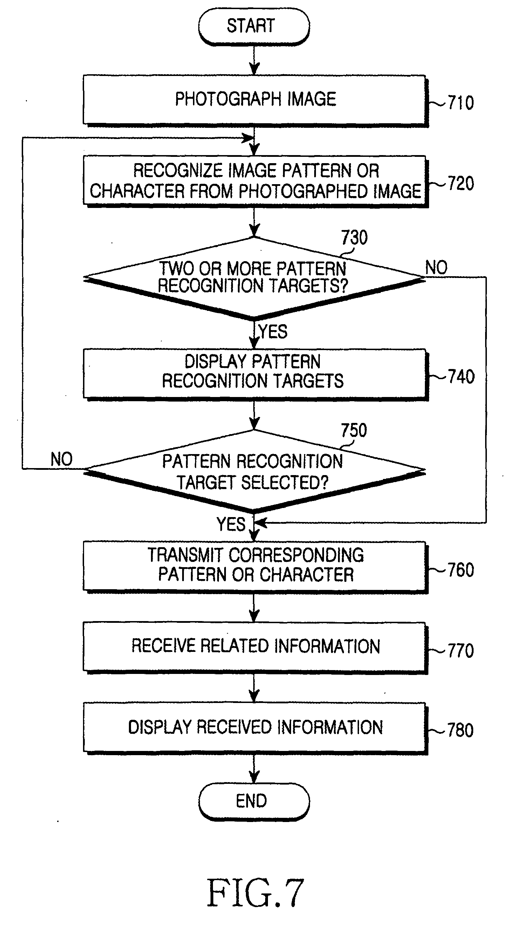

According to yet another embodiment of the present invention, the mobile terminal is designed such that when there are several pattern recognition targets in the photographed image, it can select two or more pattern recognition targets and acquire information related thereto. With reference to FIG. 7, a description will now be made of an operation of acquiring information related to two or more pattern recognition targets when there are several pattern recognition targets.

Referring to FIG. 7, the controller 130 photographs a particular image in step 710, and recognizes an image pattern or a character from the photographed image in step 720. The controller 130 determines in step 730 whether the number of recognized image patterns or characters is equal to or greater than 2. For example, several pattern recognition targets, such as number plates of buses, can be included in one image. If there is only one pattern recognition target in the photographed image, the controller 130 proceeds to step 760.

However, if the photographed image includes several pattern recognition targets, the controller 130 proceeds to step 740 where it displays the two or more pattern recognition targets. That is, the controller 130 displays several pattern recognition targets for the user, and request the user to select one of them. The controller 130 sequentially displays the pattern recognition targets on the display 150, and the user can select a desired pattern recognition target by moving a cursor and selecting a corresponding number. In step 750, the controller 130 determines if any pattern recognition target is selected by the user. If a pattern recognition target is selected by the user, the controller 130 proceeds to step 760 where it transmits the corresponding recognized image pattern or character to the information server 220.

The controller 130 receives information related to the corresponding image pattern or character from the information server 220 in step 770, and displays the information in step 780. In this embodiment, the mobile terminal 100 detects the presence of the pattern recognition targets. However, in an alternative embodiment, the information server 220 may detect the presence of several pattern recognition targets in the photographed image, and inquire of the mobile terminal 100 which pattern recognition target it will select.

As can be understood from the foregoing description, a camera module included in a mobile terminal is used, thereby expanding application of the camera module and offering convenience to the user. In addition, because the mobile terminal searches for information related to an image captured using the camera module, the user can acquire the desired information simply by photographing an image.

While the invention has been shown and described with reference to a certain preferred embodiment thereof, it will be understood by those skilled in the art that various changes in form and details may be made therein without departing from the scope of the invention as defined by the appended claims.

## Claims

1. A method for providing image-related information to a user in a system including a mobile terminal and an information server, the method comprising:
photographing, by the mobile terminal, an image, recognizing an image pattern or a character from the photographed image, and transmitting the recognition result to the information server;
searching for, by the information server, information related to the recognized image pattern or character, and transmitting the searched information to the mobile terminal; and
displaying, by the mobile terminal, the searched information provided from the information server.

2. A method for providing image-related information to a user in a system including a mobile terminal and an information server, the method comprising:
photographing, by the mobile terminal, an image and transmitting the photographed image to the information server;
recognizing, by the information server, an image pattern or a character from the photographed image;
searching for, by the information server, information related to the recognized image pattern or character and transmitting the searched information to the mobile terminal; and
displaying, by the mobile terminal, the searched information provided from the information server.

3. A method for providing image-related information to a user in a system including a mobile terminal and an information server, the method comprising:
photographing, by the mobile terminal, an image and transmitting the photographed image to the information server;
searching for, by the information server, information related to the photographed image and transmitting the searched information to the mobile terminal; and
displaying, by the mobile terminal, the searched information provided from the information server.

4. A system for providing image-related information to a user, the system comprising:
a mobile terminal for photographing an image and transmitting the photographed image; and
an information server for recognizing an image pattern or a character from the photographed image, searching for information related to the recognized image pattern or character, and transmitting the searched information to the mobile terminal;
wherein the mobile terminal receives the searched information provided from the information server and displays the received information.

5. A mobile terminal for providing image-related information to a user, the mobile terminal comprising:
a camera module for photographing an image;
a database for storing an image, an image pattern or a character, and information related thereto; and
a controller for recognizing an image pattern or a character from an image photographed using the camera module, searching the database for information related thereto, and providing the searched information to the user.

6. The mobile terminal of claim 5, wherein the controller displays a capture window for capturing a part of the image and changes a size and/or position of the capture window according to a key input from the user.

7. A method for providing image-related information to a user in a system including a mobile terminal and an information server, the method comprising:
photographing, by the mobile terminal, an image, recognizing an image pattern or a character from the photographed image, and if there are two or more pattern recognition targets, receiving one pattern recognition target selected by the user, and transmitting the selected pattern recognition target to the information server;
searching for, by the information server, information related to the recognized image pattern or character of the received pattern recognition target and transmitting the searched information to the mobile terminal; and
displaying, by the mobile terminal, the searched information provided from the information server.

8. A mobile terminal for providing image-related information to a user, the mobile terminal comprising:
a display for displaying a moving image;
a database for storing an image, an image pattern or a character, and information related thereto; and
a controller for, if a capture key is pressed by the user while displaying the moving image, capturing from the moving image an image displayed at the time when the capture key is pressed, recognizing an image pattern or a character from the captured image, searching the database for information related thereto, and providing the searched information to the user.
